# EUROPÄISCHE PATENTSCHRIFT

(11) **EP 4 037 864 B1**
(45) Veröffentlichungstag und Bekanntmachung des Hinweises auf die Patenterteilung: **03.09.2025**
(21) Anmeldenummer: 20804457.8
(22) Anmeldetag: 29.10.2020
(51) Int. Cl.: B23K 26/0622, B23K 26/382, B23K 26/384, B23K 101/00

(54) **VORGEHENSWEISE BEIM LASERBOHREN VON MEHREREN LÖCHERN AUF BASIS DER FOKUSLAGE**
PROCEDURE FOR LASER DRILLING A PLURALITY OF HOLES ON THE BASIS OF THE FOCAL POSITION
PROCÉDÉ DE PERÇAGE LASER D'UNE PLURALITÉ DE TROUS SUR LA BASE DE LA POSITION FOCALE

(30) Priorität: 26.11.2019 DE 102019218292
(43) Veröffentlichungstag der Anmeldung: 10.08.2022
(73) Patentinhaber: Siemens Energy Global GmbH & Co. KG, 81739 München (DE)
(72) Erfinder: BECK, Thomas, 16341 Panketal (DE); KATZURKE, Oliver, 12205 Berlin (DE); VOLLGOLD, Marcel, 14467 Potsdam (DE); ZIMMERMANN, Richard, 10318 Berlin (DE)
(86) Internationale Anmeldenummer: PCT/EP2020/080411
(87) Internationale Veröffentlichungsnummer: WO 2021/104792

(56) Entgegenhaltungen:
- DE-A1- 102011 000 144
- DE-A1- 102014 220 525

## Beschreibung

Die Erfindung betrifft die Vorgehensweise beim Herstellen von mehreren Löchern, insbesondere Durchgangslöchern, bei der ein Laser benutzt wird, um Material für das Loch abzutragen (siehe, z.B. DE 10 2014 220525 A1).

Durchgangslöcher werden bei vielen Bauteilen wie z. B. bei Brennereintrittsdüsen oder auch bei Filmkühllöchern bei Gasturbinenschaufeln benötigt.

Dabei wird zweckmäßigerweise ein Laser verwendet, der sowohl durch eine äußere Keramikschicht als auch innere Metallschichten oder metallische bzw. keramische Substrate sich hindurcharbeiten kann. Für die Reproduzierbarkeit und die Schonung des zu durchbohrenden Substrates ist es notwendig, dass sich durch den Energieeintrag bei der Herstellung eines Lochs das Umgebungsmaterial nicht zu stark erwärmt.

Daher ist es bekannt, wenn in einem Substrat mehrere Löcher hergestellt werden müssen, diese abwechselnd zu bearbeiten, wobei der Abtrag in Lagen erfolgt und die Abfolge der zu bearbeitenden Löcher so gewählt wird, dass der Abstand möglichst groß ist und kein Wärmefluss zu den anderen Löchern stattfindet.

Diesen Prozess gilt es weiter zu verbessern.

Es ist daher Aufgabe der Erfindung oben genanntes Problem zu lösen.

Die Aufgabe wird gelöst durch ein Verfahren gemäß Anspruch 1.

In den Unteransprüchen sind weitere vorteilhafte Maßnahmen aufgelistet, die beliebig miteinander kombiniert werden können, um weitere Vorteile zu erzielen.

Es zeigen
- Figur 1: schematisch die Vorgehensweise sowie
- Figur 2, 3: Formen herzustellender Löcher.

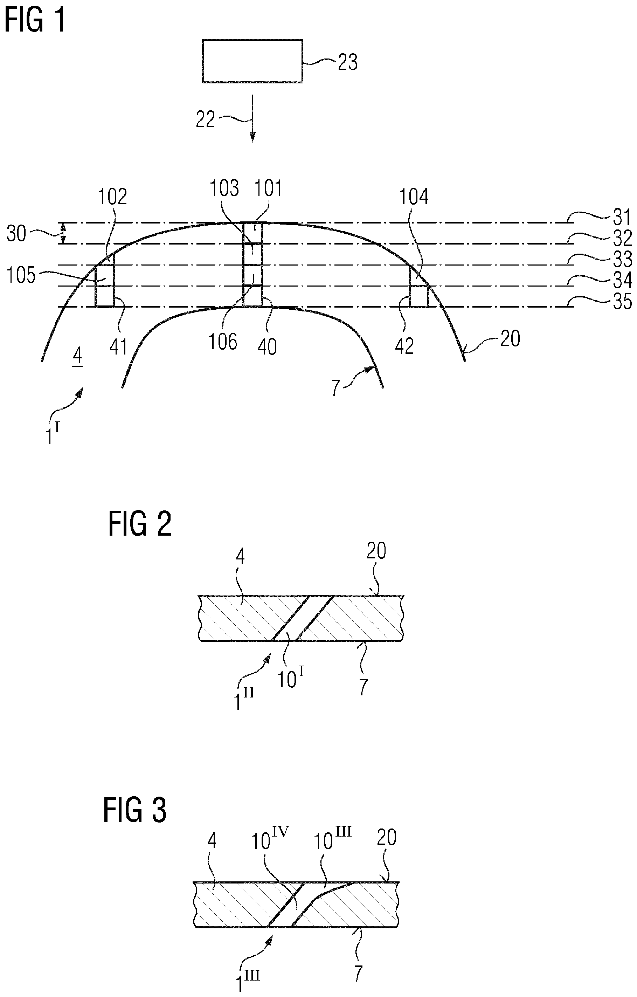

Figur 2 zeigt ein erstes Ausführungsbeispiel eines Durchgangslochs 10' eines Bauteils 1" aus einem Substrat 4.

Das Durchgangsloch 10' ist vorzugsweise im Querschnitt einer Durchströmrichtung eines Kühlmediums in dem Loch 10' im Querschnitt konstant, insbesondere zylindrisch oder ovalförmig ausgebildet und kann in einem bestimmten Winkel zur äußeren Oberfläche 20 verlaufen. Dabei strömt z. B. ein Kühlfluid aus dem Inneren durch das Durchgangsloch 10' nach außen. Der innere Hohlraum wird begrenzt durch die innere Oberfläche 7.

In Figur 3 ist ein weiteres Durchgangsloch 10^{IV} gezeigt, das in Ergänzung zu Figur 2 einen Diffusor 10‴ aufweist, der eine Verbreiterung des Lochs im Bereich der Oberfläche 20, die auch hier wie bei Figur 1 gekrümmt sein kann, darstellt.

Die Krümmung der Oberfläche 20 ist hier nicht dargestellt, ebenso eventuell vorhandene Schichten (metallische Schicht, TBC).

In Figur 1 ist schematisch die erfindungsgemäße Vorgehensweise dargestellt, die bei gekrümmten Oberflächen 20 eines Bauteils 1', 1", 1‴ mit oder ohne Beschichtungen (TBC) angewendet wird.

Es sollen an verschiedenen Stellen mehrere Löcher 40, 41, 42, ... gleichzeitig hergestellt werden.

In einer Z-Ausrichtung 22 und einer Strahlrichtung eines Lasers 23 definieren sich dazu senkrechte Ebenen 31, 32, 33, 34, 35, ....

Die erste Ebene 31 stellt insbesondere eine Sekante zu der Oberfläche 20 dar und berührt vorzugsweise, aber nicht notwendigerweise, ein erstes Loch 40, das aber in jedem Fall in der Z-Richtung 22 dem Laser 23 am nächsten ist. Dies ist bedingt durch die Krümmung und könnte zur Definition "Krümmung" herangezogen werden.

Der Laser 23 arbeitet vorzugsweise in einem bestimmten Abstand zum bearbeiteten Bauteil, hier insbesondere die Fokuslage, also den Ebenen 31, 32, ....

Die erfindungsgemäße Vorgehensweise liegt darin, um eine schnellere Bearbeitung zu ermöglichen, sich auch nach der Fokuslage, die als beispielhafter Abstand des Lasers hier genommen wird, zu richten.

Die erste Ebene 31 stellt also die erste Fokuslage dar, in der Material abgetragen wird.

Somit wird zuerst eine erste Lage 101 des ersten herzustellenden Lochs 40 hergestellt. Eine andere Lage eines anderen Lochs 41, 42 liegt beispielsweise nicht in der Ebene 31 der aktuellen Fokuslage.

Dann wird eine zweite Ebene 32 erreicht. Unterhalb dieser Ebene 32 in der Dicke 30 eines abzutragenden Bereiches (= Lage) werden jetzt zwei Löcher 40, 41 erfasst, nämlich eine zweite Lage 103 unter der ersten Lage 101 des ersten Lochs 40 und eine erste Lage 102, hier ein äußerster Bereich, eines zweiten Lochs 41. Diese Lagen 102, 103 werden dann als nächstes abgetragen, wobei vorzugsweise zuerst die erste Lage 102 des zweiten Lochs 41 abgetragen wird, nachdem für das erste Loch 40 der erste Bereich 101 entfernt wurde und dann wird vorzugsweise die zweite Lage 103 des ersten Lochs 40 abgetragen.

Im nächsten Schritt umfasst die verschobene Fokuslage des Lasers 23 die Ebene 33, eine zweite Lage 105 des zweiten Lochs 41, ebenso eine dritte Lage 106 des ersten Lochs 40 und eine erste Lage 104 des dritten Lochs 42, das zum ersten Mal bearbeitet wird, nachdem die Fokuslage fortgeschritten ist.

Da vorzugsweise im vorherigen Schritt das erste Loch 40 zuletzt bearbeitet wurde, wird zuerst ein erster Teilbereich 104 des dritten Lochs 42 und ein zweiter Bereich 105 des zweiten Lochs 41 bearbeitet, und dann als nächsten Schritt für diese Abtragsebene der dritte Bereich 106 des Lochs 40.

Die Verschiebung der Fokuslage kann insbesondere kontinuierlich und ganz insbesondere stetig erfolgen.

Damit ist die Vorgehensweise schematisch dargestellt bis zum Ende, d.h. insbesondere zum Durchbruch für Durchgangslöcher.

Am Anfang werden nicht alle Löcher 40, 41, 42, ... von einer Fokuslage erfasst.

Ebenso nahe dem Ende des Herstellungsverfahrens sind einige Löcher 40 schon fertig gestellt, während andere Löcher 41, 42 noch eine weitere Bearbeitung zur Fertigstellung benötigen.

Weitere Modifikationen sind für den Fachmann leicht erkennbar.

Die Löcher 40, 41, 42 können natürlich auch unter einem anderen Winkel zur Oberfläche 20 verlaufen als in der Figur 1 dargestellt ist.

Die mittlere Leistung des Lasers 23 beträgt vorzugsweise 100 Watt bis 200 Watt.

Der Laser 23 wird vorzugsweise gepulst, wobei insbesondere Nanosekundenpulse, insbesondere ≤ 500ns, verwendet werden.

## Patentansprüche

1. Verfahren zur Herstellung von mehreren Löchern (40, 41, 42, ...) eines Substrats (4) mit einer gekrümmten Oberfläche (20),
wobei Material in den einzelnen Löchern (40, 41, 42, ...)
durch einen Laser (23) lagenweise abgetragen wird,
wobei die Strahlrichtung des Lasers (23) eine Z-Richtung (22) definiert,
wobei die ersten Lagen (101) oder die erste Lage (101) und weitere abzutragende Lagen (102, 103, ...) der Löcher (40, 41, 42, ...) bedingt durch die Krümmung in verschiedenen Abständen (31, 32, ...) in der Z-Richtung (22) des Lasers (23) liegen,
**dadurch gekennzeichnet dass** die Löcher (40, 41, 42, ...) jeweils nur in einer bestimmten Fokuslage bearbeitet werden,
wobei nur die Löcher (40, 41, 42, ...) bearbeitet werden, die von derselben Fokuslage (31, 32, ...) erfasst werden.

2. Verfahren nach Anspruch 1,
bei dem die mittlere Leistung des Lasers (23) 100W bis 200W beträgt.

3. Verfahren nach einem oder beiden der Ansprüche 1 oder 2, bei dem der Laser (23) gepulst wird,
insbesondere Nanosekundenpulse, d.h. ≤ 500ns, verwendet werden.

4. Verfahren nach einem oder mehreren der Ansprüche 1, 2 oder 3,
bei dem ein Turbinenbauteil hergestellt wird,
insbesondere ein Schichtsystem aus keramischer Schicht und innerer metallischer Schicht mit metallischem Substrat.

5. Verfahren nach einem oder mehreren der Ansprüche 1, 2, 3 oder 4,
bei dem ein Filmkühlloch (1‴) hergestellt wird,
das einen inneren Anteil (10^{IV}),
vorzugsweise mit konstantem Querschnitt,
und eine Verbreiterung (10‴) an der Oberfläche (20) aufweist.

6. Verfahren nach einem oder mehreren der vorherigen Ansprüche,
bei dem nur ein Loch (10') mit konstantem Querschnitt, insbesondere zylindrisch,
hergestellt wird.

7. Verfahren nach einem oder mehreren der vorherigen Ansprüche,
bei dem die Fokuslage stetig verschoben wird.

## Claims

1. Method
for producing a plurality of holes (40, 41, 42, ...) in a substrate (4) having a curved surface (20),
wherein material in the individual holes (40, 41, 42, ...) is removed layer-by-layer by a laser (23),
wherein the radiation direction of the laser (23) defines a Z direction (22),
wherein the first layers (101) or the first layer (101) and further layers (102, 103, ...) to be removed of the holes (40, 41, 42, ...) are at different distances (31, 32, ...) in the Z direction (22) of the laser (23) owing to the curvature, **characterized in that** the holes (40, 41, 42, ...) are each machined only in a specific focal position,
wherein only the holes (40, 41, 42, ...) covered by the same focal position (31, 32, ...) are machined.

2. Method according to Claim 1,
wherein the average power of the laser (23) is 100 W to 200 W.

3. Method according to one or both of Claims 1 and 2,
wherein the laser (23) is pulsed,
use being made in particular of nanosecond pulses, i.e. ≤ 500 ns.

4. Method according to one or more of Claims 1, 2 and 3,
wherein a turbine component is produced,
in particular a layer system comprising a ceramic layer and an inner metallic layer with a metallic substrate.

5. Method according to one or more of Claims 1, 2, 3 and 4, wherein a film cooling hole (1‴) is produced,
which has an inner portion (10^{IV}),
preferably with a constant cross section,
and a widened portion (10‴) on the surface (20).

6. Method according to one or more of the preceding claims,
wherein only one hole (10') with a constant cross section, which in particular is cylindrical,
is produced.

7. Method according to one or more of the preceding claims, wherein the focal position is shifted continuously.

## Revendications

1. Procédé
de production de plusieurs trous (40, 41, 42, ...) d'un substrat (4) ayant une surface (20) incurvée,
dans lequel on enlève couche par couche du matériau dans les divers trous (40, 41, 42, ...) par un laser (23),
dans lequel la direction de rayonnement du laser (23) définit une direction Z (22),
dans lequel la première couche (101)
ou la première couche (101) et d'autres couches (102, 103, ...) à enlever des trous (40, 41, 42, ...) se trouvent en raison de la courbure à des distances (31, 32, ...) du laser (23) différentes dans la direction Z (22),
**caractérisé en ce que** l'
on usine les trous (40, 41, 42, ...) respectivement seulement dans une position focale déterminée,
dans lequel on n'usine que les trous (40, 41, 42, ...), qui sont concernés par la même position (31, 32, ...) focale.

2. Procédé suivant la revendication 1,
dans lequel la puissance moyenne du laser (23) s'élève à 100 W jusqu'à 200 W.

3. Procédé suivant l'une ou les deux des revendications 1 ou 2,
dans lequel on pulse le laser (23),
dans lequel on utilise en particulier des impulsions de nanoseconde, c'est-à-dire ≤ 500ns.

4. Procédé suivant l'une ou plusieurs des revendications 1, 2 ou 3,
dans lequel on fabrique une pièce de turbine,
en particulier un système stratifié composé d'une couche céramique et d'une couche métallique intérieure avec substrat métallique.

5. Procédé suivant l'une ou plusieurs des revendications 1, 2, 3 ou 4,
dans lequel on produit un trou (1‴) de refroidissement pelliculaire,
qui a une partie (10^{IV}) intérieure,
de préférence de section transversale constante,
et un élargissement (10‴) à la surface (20).

6. Procédé suivant l'une ou plusieurs des revendications précédentes,
dans lequel on ne produit qu'un trou (10') de section transversale constante,
en particulier cylindrique.

7. Procédé suivant l'une ou plusieurs des revendications précédentes,
dans lequel on déplace constamment la position focale.
